# EUROPEAN PATENT SPECIFICATION

(11) **EP 3 826 826 B1**
(45) Date of publication and mention of the grant of the patent: **22.06.2022**
(21) Application number: 19749447.9
(22) Date of filing: 09.07.2019
(51) Int. Cl.: B29C 64/393, B29C 64/118

(54) **METHOD AND APPARATUS FOR MANAGING OOZE FROM A PRINT NOZZLE**
VERFAHREN UND VORRICHTUNG ZUM VERWALTEN VON SCHLICK AUS EINER DRUCKDÜSE
PROCÉDÉ ET APPAREIL DE GESTION DE SUINTEMENT À PARTIR D'UNE BUSE D'IMPRESSION

(30) Priority: 24.07.2018 NL 2021381
(43) Date of publication of application: 02.06.2021
(73) Proprietor: Ultimaker B.V., 3511 ED Utrecht (NL)
(72) Inventor: CANDLER, Paul Anthony, 4105 XG Culemborg (NL)
(74) Representative: Nederlandsch Octrooibureau
(86) International application number: PCT/NL2019/050427
(87) International publication number: WO 2020/022874

(56) References cited:
- WO-A1-2018/077712
- US-A1- 2015 097 307
- Taylor Landry: "Retraction: Just say "No" to oozing", , 6 August 2015 (2015-08-06), XP002789562, Retrieved from the Internet: URL:https://www.matterhackers.com/articles /retraction-just-say-no-to-oozing [retrieved on 2019-03-08]

## Description

### Field of the invention

The present invention relates to a method and apparatus for printing a three-dimensional object. It also relates to a method of controlling a device for printing a three-dimensional object, and to a computer program product.

### Background of the invention

Fused deposition modelling or FDM is a material extrusion type additive manufacturing technique and is currently the most widely used 3D printing technology. FDM systems generally comprise an extrusion head, suitably mounted to allow movement of the extrusion head in the X, Y and Z directions. During operation, thermoplastic filament is heated to a desired temperature and fed to a nozzle where it melts and is deposited in successive layers in predetermined locations.

In order to print two or more islands with FDM printing, it is generally desirable to interrupt the flow of thermoplastic filament from the nozzle in some way to prevent the islands being joined by a strip of printed material. One method for interrupting the flow of thermoplastic from the nozzle is to temporarily interrupt the feed of filament to the nozzle and thereby stop extrusion when travelling between islands. When the subsequent island is reached the filament is moved again and material deposition continues.

Such a "stop-and-go" technique is not an attractive solution for flexible filament materials as such filaments tend to be compressed between the filament feeder unit and the nozzle, for example. This may include a length of filament within a Bowden tube. By the time you have retracted the compressed material, the material will have oozed and leaked from the nozzle, leading to a messy print, often with apparent under extrusion. Retracting compressed material also results in a net loss of extrusion as you unretract less uncompressed material with the same number of extrusion steps.

Another option is to move the print head as quickly as possible between the first and second islands to suffer as little material loss as possible. However, both of the above scenarios result in apparent under extrusion due to material loss by filament oozing or from the time required to build up pressure because of the relatively slow pressurization dynamics in the printer head and the nozzle to achieve the required flow rate when the printing process resumes.

Syringe based additive manufacturing systems suffer from similar drawbacks. In such systems, the removal of back pressure (from the build surface) leads to a drop-in pressure within the syringe volume, thus leading to uneven pressure throughout the printing process, and a messy finish on the printed item. The internet disclosure XP002789562, https://www.matterhackers.com/ articles/retraction-just-say-no-to-oozing" shows a method of FDM aiming to reduce oozing. US 2015/097307 discloses an additive manufacturing process with dynamic heat flow control.

### Summary of the invention

The present invention seeks to solve the above problem by providing a method and system for printing separated islands of material without retracting the nozzle or interrupting the flow of print material to the nozzle. The method and system can be used to ensure that the pressure within the nozzle remains constant (or close to). A constant back pressure throughout as much of the print process as possible (and not just during printing of the islands) can allow for an even pressure within the nozzle and thus an even track width. This in turn allows for more accurate printing and a tidier, more well-defined end product. In embodiments of the invention, the pressure can be maintained at a constant level within the nozzle by keeping the counter pressure (from the printed surface) constant.

Accordingly, in a first aspect of the invention there is provided a method of printing a three-dimensional object, comprising at least one layer formed of a first region of printed material and a second region 4 of printed material separated from the first region by a space, wherein the space comprises at least one layer formed of an intermediate region. A first step in the method comprises printing the first region during a first printing step by delivering a flowable print material from a print nozzle, wherein the print nozzle travels relative to a staging surface during the first printing step at a first print speed. During a second step, the intermediate region is printed during an intermediate printing step by delivering a flowable print material from the print nozzle, wherein the print nozzle travels relative to the staging surface and delivers flowable print material over: a first travel distance at a first travel speed, a second travel distance at a second travel speed, and a third travel distance at a third travel speed. Finally, in a third step, the second region is printed during a second printing step by delivering a flowable print material from the print nozzle, wherein the print nozzle travels relative to the staging surface during the second printing step at a second print speed.

During the intermediate printing step there is no interruption of the flow of print material to the nozzle. Each of the first travel distance and the third travel distance is shorter than the second travel distance. Furthermore, each of the first travel speed and the third travel speed is greater than the first print speed, the second travel speed and the second print speed.

By providing first and third travel speeds that are greater than the print speed or the second travel speed at the edge (e.g. immediately adjacent to) the first and second islands, method according to the present invention provides for a printed product in which the intermediate portion is unconnected to the first and second islands, or is connected only by a thin connection portion, which can easily be removed from the main islands. The intermediate portion is generally a thin wall that runs along a path between the first and second islands of material. Advantageously, the intermediate region can be self-supporting, so that it does not fall during the printing process. In some embodiment, a self-supporting intermediate region can be provided by printing the intermediate region along a meandering path, e.g. a sinusoidal, zigzag, square wave shaped path or the like. An advantage of a meandering path is that a meandering wall is created which wall is more stable than a straight wall, so the risk of collapsing during the printing process is minimized.

In any event, the relatively high speed of the print head at either end of the wall means that the intermediate region can be easily broken away from the islands after the object has been completed.

By further defining the first travel distance and the third travel distance to be shorter than the second travel distance, the pressure drop in the nozzle is minimised during the relatively high speed travel across the first and third travel distances.

According to a second aspect of the invention, there is provided a device for printing a three dimensional object comprising at least one layer formed of a first region of printed material and a second region of printed material separated from the first region by a space, wherein the space comprises at least one layer formed of an intermediate region. The device comprises a print nozzle configured to deliver a flowable print material and a staging surface onto which successive layers of print material can be printed to form the three-dimensional object. A control system is provided and is configured to control movement of the print nozzle relative to the staging surface and a) move the nozzle for printing the first region during a first printing step by delivering a flowable print material from the print nozzle, wherein the print nozzle travels relative to the staging surface during the first printing step at a first print speed; b) move the nozzle for printing the intermediate region during an intermediate printing step by delivering a flowable print material from the print nozzle, wherein the print nozzle travels relative to the staging surface and delivers flowable print material over a first travel distance at a first travel speed, a second travel distance at a second travel speed, and a third travel distance at a third travel speed; and c) move the nozzle for printing the second region during a second printing step by delivering a flowable print material from the print nozzle, wherein the print nozzle travels relative to the staging surface during the second printing step at a second print speed. During the intermediate printing step there is no interruption of the flow of print material to the nozzle. Furthermore, each of the first travel distance and the third travel distance is shorter than the second travel distance, and each of the first travel speed and the third travel speed is greater than the first print speed, the second travel speed and the second print speed.

According to a further aspect of the invention, there is provided a method of controlling a device for printing a three dimensional object, the device comprising a print nozzle configured to deliver a flowable print material, and a staging surface onto which successive layers of print material can be printed to form the three dimensional object, and a feeder unit for feeding the print material to the print nozzle, the method comprising:
- move the nozzle for printing a first region during a first printing step by delivering a flowable print material from the print nozzle, wherein the print nozzle travels relative to the staging surface during the first printing step at a first print speed;
- move the nozzle for printing an intermediate region during an intermediate printing step by delivering a flowable print material from the print nozzle, wherein the print nozzle travels relative to the staging surface and delivers flowable print material over
   - a first travel distance at a first travel speed,
   - a second travel distance at a second travel speed, and
   - a third travel distance at a third travel speed;
- move the nozzle for printing a second region during a second printing step by delivering a flowable print material from the print nozzle, wherein the print nozzle travels relative to the staging surface during the second printing step at a second print speed;
- control the feeder unit so that during the intermediate printing step there is no interruption of the flow of print material to the nozzle,
wherein each of the first travel distance and the third travel distance is shorter than the second travel distance, and wherein each of the first travel speed and the third travel speed is greater than the first print speed, the second travel speed and the second print speed.

According to yet a further aspect of the invention, there is provided a computer program product comprising code embodied on computer-readable storage and configured so as when run on one or more processing units to perform the method of controlling as described above.

### Brief description of drawings

The present invention will now be described by way of reference to a number of illustrative embodiments, as shown in the accompanying drawings in which:
Figure 1 shows a simplified schematic of a print head, staging surface and a printed object according to an embodiment of the present invention;
Figure 2 shows a plan view of first and second islands of printed material and an intermediate region printed therebetween along a first path;
Figure 3 shows a top view of the object of Figure 1;
Figure 4 shows a plan view of first and second islands of printed material and an intermediate region printed therebetween along a second path; and
Figure 5 shows a schematic of a method according to an embodiment of the present invention.

### Description of embodiments

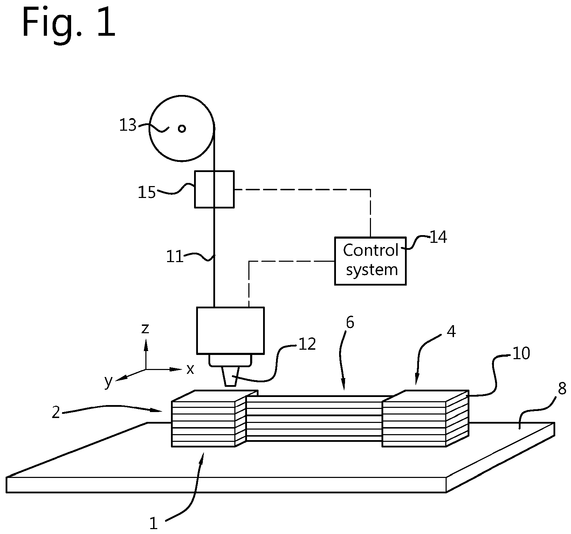

Figure 1 shows a simplified schematic of a printer assembly for printing a three-dimensional object, according to an embodiment of the present invention. As shown in Figure 1, the three-dimensional object 1 comprises at least one layer formed of a first region 2 of printed material and a second region 4 of printed material. The first region 2 is separated from the second region 4 by a space in which there is formed at least one layer formed of an intermediate region 6.

The printer assembly comprises a print nozzle 12 configured to deliver a flowable print material and a staging surface 8 onto which successive layers 10 of print material can be printed to form the three-dimensional object. A control system 14 is provided to control movement of the print nozzle 12 relative to the staging surface 8 and is configured to move the nozzle during a printing process. In this example, the printer assembly is an FDM print assembly wherein a filament 11 is fed by means of a feeder unit 15. In this example the filament 11 is stored on a spool 13, see Figure 1. The control system 14 is configured to control the feed unit 15 so as to control the feeding of the filament 11 to the print nozzle 12.

Alternatively, the printer assembly may be a syringe based print assembly comprising a filled syringe volume. In either case, the present invention can reduce or eliminate the quality issues associated with nozzle ooze on the end product.

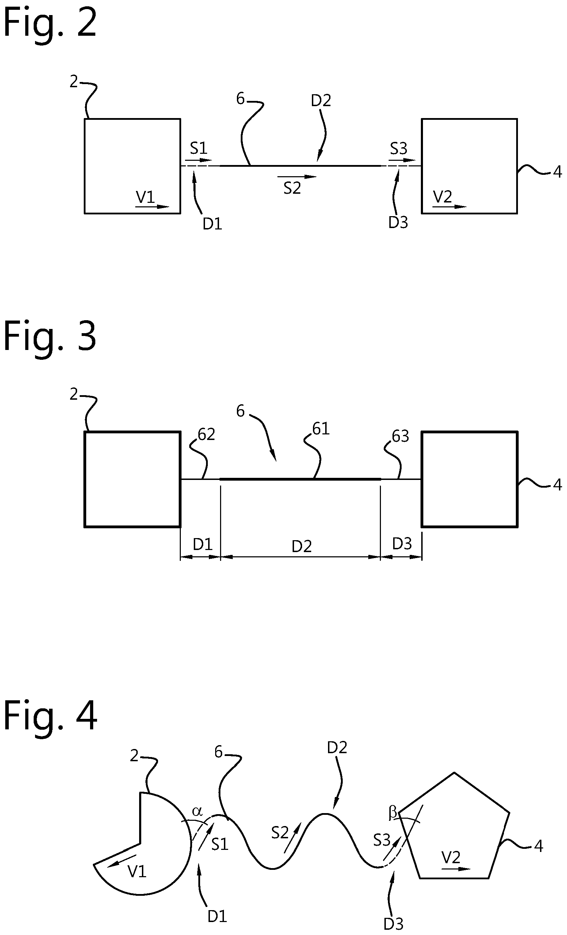

Referring now to Figure 2, the control system 14 is configured to control the movement of the print nozzle 12 in at least three phases, also referred to as printing steps.

During a first printing step, the control system 14 moves the nozzle 12 for printing the first region 2 by delivering a flowable print material from the print nozzle 12. The print nozzle 12 travels relative to the staging surface 8 during the first printing step at a first print speed V1.

During an intermediate printing step, the control system 14 moves the nozzle 12 for printing the intermediate region 6 by delivering a flowable print material from the print nozzle. During this step, the print nozzle 12 travels relative to the staging surface 8 and delivers flowable print material over a first travel distance D1 at a first travel speed S1, over a second travel distance (D2) at a second travel speed S2, and over a third travel distance D3 at a third travel speed S3.

During a second printing step, the control unit 14 moves the nozzle 12 for printing the second region 4 by delivering a flowable print material from the print nozzle. During this step, the print nozzle 12 travels relative to the staging surface 8 during the second printing step at a second print speed V2. To provide a small amount of extruded material in the intermediate region adjacent to the first and second islands, each of the first travel speed S1 and the third travel speed S3 is greater than the first print speed V1, the second travel speed S2 and the second print speed V2. By moving the print nozzle very quickly for only a short travel distance (D1 and D3), the back pressure from the printed surface remains constant throughout the print process, thus maintaining a constant pressure within the nozzle and an even print track. This allows for tidier edges and an improved end product.

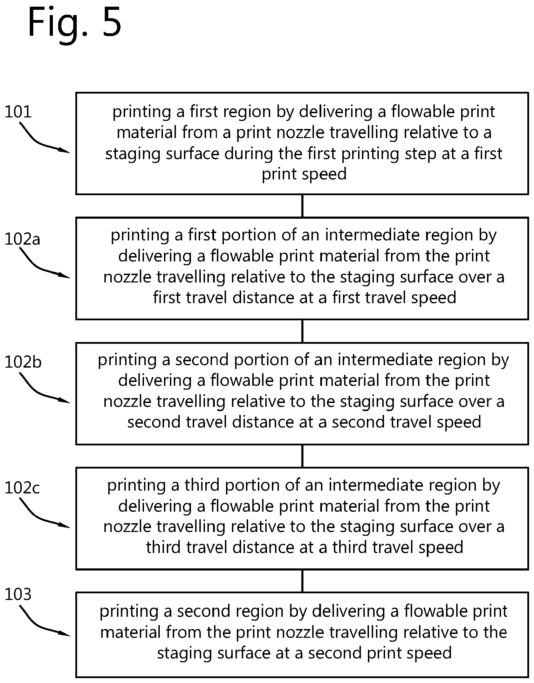

The steps of a method according to an embodiment of the present invention are shown in Figure 5. As shown in Figure 5, a method of printing a three-dimensional object comprises a first step 101 of: printing a first region 2 during a first printing phase by delivering a flowable print material from a print nozzle travelling relative to a staging surface 8 at a first print speed V1. In a second (intermediate printing) step 102, the method comprises b) printing an intermediate region 6 (in a space between the first region 2 and the second region 4) by delivering a flowable print material from the print nozzle in three phases. In a first phase 102a the nozzle 12 travels relative to the staging surface 8 to deliver flowable print material over a first travel distance D1 at a first travel speed S1. During a second phase 102b, the nozzle 12 moves over a second travel distance D2 at a second travel speed S2. During a third phase 102c, the nozzle 12 moves over and a third travel distance D3 at a third travel speed S3. In a third step 103, the method involves: printing a second region 4 by delivering a flowable print material from the print nozzle 12, which travels relative to the staging surface 8 at a second print speed V2. To ensure only a small amount of extruded material in the intermediate region adjacent to the first and second islands, each of the first travel speed S1 and the third travel speed S3 is greater than the first print speed V1, the second travel speed S2 and the second print speed V2.

As shown in Figure 2, the first distance D1 is immediate adjacent the first region 2 and the second distance D3 is immediately adjacent the second region 4. The second distance D2 connects the first and third distances D1 and D3. The skilled person will appreciate that the travel speeds S1, S2, S3 of the nozzle do not need to be constant over the entire travel distance D1, D2, D3. However, there must be an acceleration of the nozzle between V1 and S1 and S2 and S3. There must also be a deceleration of the nozzle between S3 and V2.

By providing a method and apparatus that include first and third travel speeds that are greater than the first and second print speeds and the second travel speed, the print head accelerates away from/towards the printed islands in the region immediately adjacent to the printed islands of material. This acceleration away from/towards the islands produces a final product in which the intermediate portion is unconnected to the first and second islands, or is connected only by a thin connection portion, which can easily be removed from the main islands. Figure 3 shows a top view of the object 1 of Figure 1. As can be seen, the object comprises the first region 2, the second region 4 and the intermediate region 6. The intermediate region 6 comprises an intermediate portion 61 and two connection portions 62, 63 connecting the intermediate portion 61 to the printed islands 2, 4 respectively. As can be seen from Figure 3, the connection portions 62, 63 are relatively thin. The first connection portion 62 has a length of D1, the intermediate portion 61 has a length of D2, and the second connection portion 63 has a length of D3.

The first print speed V1 may be equal to the second print speed V2, providing a constant print speed for all sections of the final object. However, the skilled person will understand that different print speeds can be used for different portions of the final object. Therefore, the first print speed V1 and the second print speed V2 can be different.

In an embodiment, each of the first travel speed S1 and the third travel speed S3 is relatively high as compared to the first print speed V1, the second travel speed S2 and the second print speed V2. A relatively high speed of the print head at either end of the wall means that the intermediate region contains relatively thin outer ends so that the intermediate region can be easily broken away from the islands after the object has been completed.

The first travel speed S1 and the third travel speed S3 can be equal. This provides a substantially uniform "fast speed" for creating the discontinuity between the intermediate portion 6 and the printed islands 2, 4.

The second travel speed S2 can be equal to one or both of the first and second print speeds V1, V2. Where the first and second print speeds are the same as each other, and the first and third travel speeds are the same as each other, the system requires only two operating speeds: V1=V2=S2 and S1=S3. However, the skilled person will appreciate that each of V1, V2, S1, S2 and S3 can be different.

In an embodiment of the invention, the first and second print speeds V1, V2 are greater than the second travel speed S2. Since the intermediate region consists of a single line structure, a lower travel speed is preferred to increase stability of the structure.

As mentioned above, the first and third travel speeds S1, S3 used during the printing of the first and second connection portions 62, 63, are greater that the first and second print speeds V1, V2. A relatively short, fast jump (compared to the first and second print speeds) combined with the viscosity of the flowable material means that the pressure drop within the nozzle is minimised. The skilled person will appreciate that in order to achieve a minimal drop in pressure for lower viscosity print material, the travel speeds can be increased. Although it is possible to vary the pressure to compensate during speed changes, without the backpressure, control of the pressure within the nozzle is challenging and variations in track width and oozing may result.

Advantageously, the intermediate region can be self-supporting, so that it does not fall during the printing process. In some embodiment, a self-supporting intermediate region can be provided by printing the intermediate region along a meandering path, e.g. a sinusoidal, zigzag, square wave shaped path or the like. An example of such an embodiment is shown in Figure 4. An advantage of a meandering path is that the resulting intermediate portion is more stable as compared to a straight wall.

In an embodiment, the intermediate region 6 leaves the first region 2 having a departure angle α with the angle α being smaller than 90 degrees, preferably smaller than 45 degrees. The angle α is defined as the angle between the tangent line on the circumference of the first region at the transition point and the initial direction of the intermediate region, i.e. of the intermediate path. An advantage of having a departure angle smaller than 90 degrees is that the nozzle movement can be more fluent and does not face abrupt direction changes. If the printing path of the nozzle is more fluent, the flow of print material can be more fluent which results in less fluctuations in the trace width. Similarly, an angle of entry β at the second portion 4 may have a value less than 90 degrees, and preferably less than 45 degrees.

The precise print and travel speeds selected for systems and methods according to the invention can be chosen depending on the configuration of the print head (nozzle diameter, flow rate, etc.) and the flowable material selected.

In one exemplary embodiment, the first and third travel speeds S1 and S3 are at least 100mm/s. For example, the first and third travel speeds S1 and S3 can be between 100 and 150mm/s, although travel speeds of up to 500mm/s are possible and have been shown to be effective in tests of the present invention. The present invention is also applicable to assemblies having travel speeds of over 500mm/s. Depending on the system, the first and third travel speeds can be at least 200 mm/s; at least 300 mm/s, or at least 400 mm/s.

The first and second print speeds V1, V2 can be at least 20 mm/s. For example, the first and second print speeds can be between 20 and 60 mm/s. The present invention is also applicable to assembling providing print speeds of over 60 mm/s.

The second travel speed S2 can be at least 20 mm/s (e.g. between 20 and 50 mm/s). The present invention is also applicable to assemblies providing travel speeds of over 50 mm/s.

To prevent movement of printed artefacts (first and second islands 2, 4), the control system 14 can be configured to limited acceleration (and deceleration) of the print head to a predetermined threshold. For example, systems and methods according to the present invention can limit acceleration from the first print speed V1 to the first travel speed S1. Acceleration from the second travel speed S2 to the third travel speed S3 can also be limited, as can deceleration from the first travel speed S1 to the second travel speed S2 and deceleration from the third travel speed S3 to the second print speed V2.

The distances D1, D2 and D3 can be chosen depending on the object to be printed and the rheology of the flowable material to be printed. In any event, to ensure that the pressure drop in the nozzle 12 is minimised during the relatively high speed travel across distances D1 and D3, D2 is larger than D1 and D3. In exemplary embodiments, D1 and D3 are between 0.1 and 5mm, between 0.3 and 4mm, or between 0.5 and 3mm.

In the above the intermediate printing step is defined as a separate printing step. However it should be noted that not only 'during' the intermediate printing step there is no interruption of the flow of the print material to the nozzle, but also at the transitions between this intermediate printing step and the other two printing steps (i.e. the first and second printing step). This means that during the printing of one layer, the is no interruption of the flow of print material to the nozzle. One should note that the feeding of the filament may vary but never to that extent that the flow of material is interrupted during the printing of the first, second and intermediate region.

In the examples above, only the printing of the perimeters of the regions 2 and 4 are shown. It is clear to the skilled person that the regions 2 and 4 may be filled with infill to produce solid, or at least partly filled, objects.

The flowable material extruded through the nozzle 12 can comprise a flexible polymer, such as a thermoplastic polyurethane. The present invention solves many of the ooze management problems associated with this type of flexible material because the pressure within the print nozzle is maintained at a constant level throughout the print process.

Advantageously, systems and methods according to the present invention can keep the distance between the nozzle and the previously printed layer constant. In other words, the nozzle does not retract to travel the distance between islands 2 and 4. This circumvents the disadvantages of retraction type print heads, which often lead to poor object construction due to ooze of flowable material.

Moreover, systems and method according to the present invention can be configured such that the flowable material flows at a constant rate from the nozzle 12. This simplifies the flow control within the printer and prevents the poor build quality that can occur as a result of varying pressure within the print head (including the extrusion channels and the nozzle 12).

The skilled person will understand that the present invention has been described with reference to a number of illustrative, exemplary embodiments and that modifications may be made to these embodiments without departing from the scope of the invention defined by the appended claims.

## Claims

1. A method of printing a three-dimensional object, comprising at least one layer formed of a first region (2) of printed material and a second region (4) of printed material separated from the first region (2) by a space, wherein the space comprises at least one layer formed of an intermediate region (6), the method comprising the steps of:
a) printing the first region (2) during a first printing step by delivering a flowable print material from a print nozzle (12), wherein the print nozzle travels relative to a staging surface (8) during the first printing step at a first print speed (V1);
b) printing the intermediate region (6) during an intermediate printing step by delivering a flowable print material from the print nozzle, wherein the print nozzle travels relative to the staging surface (8) and delivers flowable print material over
a first travel distance (D1) at a first travel speed (S1),
a second travel distance (D2) at a second travel speed (S2), and
a third travel distance (D3) at a third travel speed (S3);
c) printing the second region (4) during a second printing step by delivering a flowable print material from the print nozzle, wherein the print nozzle travels relative to the staging surface (8) during the second printing step at a second print speed (V2);
wherein during the intermediate printing step there is no interruption of the flow of print material to the nozzle (12), and wherein each of the first travel distance (D1) and the third travel distance (D3) is shorter than the second travel distance (D2), and wherein each of the first travel speed (S1) and the third travel speed (S3) is greater than the first print speed (V1), the second travel speed (S2) and the second print speed (V2).

2. The method according to claim 1, wherein the first print speed (V1) is equal to the second print speed (V2).

3. The method according to claim 1 or claim 2, wherein each of the first travel speed (S1) and the third travel speed (S3) is relatively high as compared to the first print speed (V1), the second travel speed (S2) and the second print speed (V2).

4. The method according to any of claims 1 to 3, wherein the second travel speed (S2) is equal to the first print speed (V1) and/or the second print speed (V2).

5. The method according to any of claims 1 to 3, wherein the first and third travel speeds (S1, S3) are greater than the first and second print speeds (V1, V2), which are greater than the second travel speed (S2).

6. The method according to any of claims 1 to 5, wherein the intermediate region follows a meandering path.

7. The method according to any of claims 1 to 6, wherein the first and third travel speeds are:
at least 200 mm/s;
at least 300 mm/s, or
at least 400 mm/s.

8. The method according to any of claims 1 to 7, wherein at least one of the following is limited to a predetermined threshold:
acceleration from the first print speed (V1) to the first travel speed (S1);
acceleration from the second travel speed (S2) to the third travel speed (S3);
deceleration from the first travel speed (S1) to the second travel speed (S2);
deceleration from the third travel speed (S3) to the second print speed (V2).

9. The method according to any of claims 1 to 8, wherein the flowable material comprises a flexible polymer e.g. thermoplastic polyurethane.

10. The method according to any of claims 1 to 9, wherein during printing the distance between the nozzle and a previously printed layer is constant.

11. The method according to claims 1 to 10, wherein the flowable material flows at a constant rate from the nozzle.

12. The method according to claims 1 to 11, wherein the intermediate region (6) leaves the first region (2) with a departure angle (α), wherein the departure angle (α) is smaller than 90 degrees, preferably smaller than 45 degrees.

13. A device for printing a three dimensional object comprising at least one layer formed of a first region (2) of printed material and a second region (4) of printed material separated from the first region (2) by a space, wherein the space comprises at least one layer formed of an intermediate region (6), the device comprising:
a print nozzle (12) configured to deliver a flowable print material;
a staging surface (8) onto which successive layers (10) of print material can be printed to form the three-dimensional object; and
a control system (14) configured to control movement of the print nozzle (12) relative to the staging surface (8), wherein the control system is configured to:
a) move the nozzle for printing the first region (2) during a first printing step by delivering a flowable print material from the print nozzle (12), wherein the print nozzle (12) travels relative to the staging surface (8) during the first printing step at a first print speed (V1);
b) move the nozzle for printing the intermediate region (6) during an intermediate printing step by delivering a flowable print material from the print nozzle, wherein the print nozzle travels relative to the staging surface (8) and delivers flowable print material over
a first travel distance (D1) at a first travel speed (S1),
a second travel distance (D2) at a second travel speed (S2), and
a third travel distance (D3) at a third travel speed (S3); and
c) move the nozzle (12) for printing the second region (4) during a second printing step by delivering a flowable print material from the print nozzle, wherein the print nozzle travels relative to the staging surface (8) during the second printing step at a second print speed (V2);
wherein during the intermediate printing step there is no interruption of the flow of print material to the nozzle (12), and wherein each of the first travel distance (D1) and the third travel distance (D3) is shorter than the second travel distance (D2), and wherein each of the first travel speed (S1) and the third travel speed (S3) is greater than the first print speed (V1), the second travel speed (S2) and the second print speed (V2).

14. A method of controlling a device for printing a three dimensional object, the device comprising a print nozzle (12) configured to deliver a flowable print material, and a staging surface (8) onto which successive layers (10) of print material can be printed to form the three dimensional object, and a feeder unit (15) for feeding the print material to the print nozzle (12), the method comprising:
- move the nozzle for printing a first region (2) during a first printing step by delivering a flowable print material from the print nozzle (12), wherein the print nozzle (12) travels relative to the staging surface (8) during the first printing step at a first print speed (V1);
- move the nozzle for printing an intermediate region (6) during an intermediate printing step by delivering a flowable print material from the print nozzle, wherein the print nozzle travels relative to the staging surface (8) and delivers flowable print material over
a first travel distance (D1) at a first travel speed (S1),
a second travel distance (D2) at a second travel speed (S2), and
a third travel distance (D3) at a third travel speed (S3);
- move the nozzle (12) for printing a second region (4) during a second printing step by delivering a flowable print material from the print nozzle, wherein the print nozzle travels relative to the staging surface (8) during the second printing step at a second print speed (V2);
- control the feeder unit (15) so that during the intermediate printing step there is no interruption of the flow of print material to the nozzle,
wherein each of the first travel distance (D1) and the third travel distance (D3) is shorter than the second travel distance (D2), and wherein each of the first travel speed (S1) and the third travel speed (S3) is greater than the first print speed (V1), the second travel speed (S2) and the second print speed (V2).

15. A computer program product comprising code embodied on computer-readable storage and configured so as when run on one or more processing units to perform the method of claim 14.

## Patentansprüche

1. Verfahren zum Drucken eines dreidimensionalen Objekts, das mindestens eine Schicht umfasst, die aus einem ersten Bereich (2) aus gedrucktem Material und einem zweiten Bereich (4) aus gedrucktem Material gebildet ist, der von dem ersten Bereich (2) durch einen Zwischenraum getrennt ist, wobei der Zwischenraum mindestens eine Schicht umfasst, die aus einem Zwischenbereich (6) gebildet ist, wobei das Verfahren die folgenden Schritte umfasst:
a) Drucken des ersten Bereichs (2) während eines ersten Druckschritts durch Abgeben eines fließfähigen Druckmaterials aus einer Druckdüse (12), wobei sich die Druckdüse während des ersten Druckschritts mit einer ersten Druckgeschwindigkeit (V1) relativ zu einer Bereitstellungsfläche (8) bewegt;
b) Drucken des Zwischenbereichs (6) während eines Zwischendruckschritts durch Abgeben eines fließfähigen Druckmaterials aus der Druckdüse, wobei sich die Druckdüse relativ zu der Bereitstellungsfläche (8) bewegt und fließfähiges Druckmaterial abgibt über
eine erste Bewegungsdistanz (D1) mit einer ersten Bewegungsgeschwindigkeit (S1),
eine zweite Bewegungsdistanz (D2) mit einer zweiten Bewegungsgeschwindigkeit (S2), und
eine dritte Bewegungsdistanz (D3) mit einer dritten Bewegungsgeschwindigkeit (S3);
c) Drucken des zweiten Bereichs (4) während eines zweiten Druckschritts durch Abgeben eines fließfähigen Druckmaterials aus der Druckdüse, wobei sich die Druckdüse während des zweiten Druckschritts mit einer zweiten Druckgeschwindigkeit (V2) relativ zu der Bereitstellungsfläche (8) bewegt;
wobei während des Zwischendruckschritts keine Unterbrechung des Flusses des Druckmaterials zu der Düse (12) vorliegt, und wobei die erste Bewegungsdistanz (D1) und die dritte Bewegungsdistanz (D3) jeweils kürzer als die zweite Bewegungsdistanz (D2) sind, und wobei die erste Bewegungsgeschwindigkeit (S1) und die dritte Bewegungsgeschwindigkeit (S3) größer als die erste Druckgeschwindigkeit (V1), die zweite Bewegungsgeschwindigkeit (S2) und die zweite Druckgeschwindigkeit (V2) sind.

2. Verfahren nach Anspruch 1, wobei die erste Druckgeschwindigkeit (V1) gleich der zweiten Druckgeschwindigkeit (V2) ist.

3. Verfahren nach Anspruch 1 oder Anspruch 2, wobei die erste Bewegungsgeschwindigkeit (S1) und die dritte Bewegungsgeschwindigkeit (S3) im Vergleich zur ersten Druckgeschwindigkeit (V1), zur zweiten Bewegungsgeschwindigkeit (S2) und zur zweiten Druckgeschwindigkeit (V2) jeweils relativ hoch sind.

4. Verfahren nach einem der Ansprüche 1 bis 3, wobei die zweite Bewegungsgeschwindigkeit (S2) gleich der ersten Druckgeschwindigkeit (V1) und/oder der zweiten Druckgeschwindigkeit (V2) ist.

5. Verfahren nach einem der Ansprüche 1 bis 3, wobei die erste und die dritte Bewegungsgeschwindigkeit (S1, S3) größer als die erste und die zweite Druckgeschwindigkeit (V1, V2) sind, die größer als die zweite Bewegungsgeschwindigkeit (S2) sind.

6. Verfahren nach einem der Ansprüche 1 bis 5, wobei der Zwischenbereich einem mäanderförmigen Pfad folgt.

7. Verfahren nach einem der Ansprüche 1 bis 6, wobei die erste und dritte Bewegungsgeschwindigkeit beträgt:
mindestens 200 mm/s;
mindestens 300 mm/s, oder
mindestens 400 mm/s.

8. Verfahren nach einem der Ansprüche 1 bis 7, wobei mindestens eine der Folgenden auf einen vorbestimmten Schwellenwert begrenzt ist:
Beschleunigung von der ersten Druckgeschwindigkeit (V1) auf die erste Bewegungsgeschwindigkeit (S1);
Beschleunigung von der zweiten Bewegungsgeschwindigkeit (S2) auf die dritte Bewegungsgeschwindigkeit (S3);
Verzögerung von der ersten Bewegungsgeschwindigkeit (S1) auf die zweite Bewegungsgeschwindigkeit (S2);
Verzögerung von der dritten Bewegungsgeschwindigkeit (S3) auf die zweite Druckgeschwindigkeit (V2).

9. Verfahren nach einem der Ansprüche 1 bis 8, wobei das fließfähige Material ein flexibles Polymer, z. B. ein thermoplastisches Polyurethan, umfasst.

10. Verfahren nach einem der Ansprüche 1 bis 9, wobei während des Druckens der Abstand zwischen der Düse und einer zuvor gedruckten Schicht konstant ist.

11. Verfahren nach einem der Ansprüche 1 bis 10, wobei das fließfähige Material mit einer konstanten Rate aus der Düse fließt.

12. Verfahren nach einem der Ansprüche 1 bis 11, wobei der Zwischenbereich (6) den ersten Bereich (2) mit einem Ausgangswinkel (a) verlässt, wobei der Ausgangswinkel (a) kleiner als 90 Grad, vorzugsweise kleiner als 45 Grad ist.

13. Vorrichtung zum Drucken eines dreidimensionalen Objekts, das mindestens eine Schicht umfasst, die aus einem ersten Bereich (2) aus gedrucktem Material und einem zweiten Bereich (4) aus gedrucktem Material gebildet ist, der von dem ersten Bereich (2) durch einen Zwischenraum getrennt ist, wobei der Zwischenraum mindestens eine Schicht umfasst, die aus einem Zwischenbereich (6) gebildet ist, wobei die Vorrichtung umfasst:
eine Druckdüse (12), die so konfiguriert ist, dass sie ein fließfähiges Druckmaterial abgibt;
eine Bereitstellungsfläche (8), auf die aufeinanderfolgende Schichten (10) von Druckmaterial gedruckt werden können, um das dreidimensionale Objekt zu bilden; und
ein Steuersystem (14), das so konfiguriert ist, dass es die Bewegung der Druckdüse (12) relativ zu der Bereitstellungsfläche (8) steuert, wobei das Steuersystem so konfiguriert ist, dass es
a) die Düse zum Drucken des ersten Bereichs (2) während eines ersten Druckschritts durch Abgeben eines fließfähigen Druckmaterials aus der Druckdüse (12) bewegt, wobei sich die Druckdüse (12) während des ersten Druckschritts mit einer ersten Druckgeschwindigkeit (V1) relativ zu der Bereitstellungsfläche (8) bewegt;
b) die Düse zum Drucken des Zwischenbereichs (6) während eines Zwischendruckschritts durch Abgeben eines fließfähigen Druckmaterials aus der Druckdüse bewegt, wobei sich die Druckdüse relativ zu der Bereitstellungsfläche (8) bewegt und fließfähiges Druckmaterial abgibt über
eine erste Bewegungsdistanz (D1) mit einer ersten Bewegungsgeschwindigkeit (S1),
eine zweite Bewegungsdistanz (D2) mit einer zweiten Bewegungsgeschwindigkeit (S2), und
eine dritte Bewegungsdistanz (D3) mit einer dritten Bewegungsgeschwindigkeit (S3); und
c) die Düse (12) zum Drucken des zweiten Bereichs (4) während eines zweiten Druckschritts durch Abgeben eines fließfähigen Druckmaterials aus der Druckdüse bewegt, wobei sich die Druckdüse während des zweiten Druckschritts mit einer zweiten Druckgeschwindigkeit (V2) relativ zu der Bereitstellungsfläche (8) bewegt;
wobei während des Zwischendruckschritts keine Unterbrechung des Flusses des Druckmaterials zu der Düse (12) vorliegt, und wobei die erste Bewegungsdistanz (D1) und die dritte Bewegungsdistanz (D3) jeweils kürzer als die zweite Bewegungsdistanz (D2) sind, und wobei die erste Bewegungsgeschwindigkeit (S1) und die dritte Bewegungsgeschwindigkeit (S3) größer als die erste Druckgeschwindigkeit (V1), die zweite Bewegungsgeschwindigkeit (S2) und die zweite Druckgeschwindigkeit (V2) sind.

14. Verfahren zum Steuern einer Vorrichtung zum Drucken eines dreidimensionalen Objekts, wobei die Vorrichtung eine Druckdüse (12), die konfiguriert ist, um ein fließfähiges Druckmaterial zu liefern, und eine Bereitstellungsoberfläche (8), auf die aufeinanderfolgende Schichten (10) von Druckmaterial gedruckt werden können, um das dreidimensionale Objekt zu bilden, und eine Zuführungseinheit (15) zum Zuführen des Druckmaterials zu der Druckdüse (12) umfasst, wobei das Verfahren folgende Schritte umfasst:
- Bewegen der Düse zum Drucken eines ersten Bereichs (2) während eines ersten Druckschritts durch Abgabe eines fließfähigen Druckmaterials aus der Druckdüse (12), wobei sich die Druckdüse (12) während des ersten Druckschritts mit einer ersten Druckgeschwindigkeit (V1) relativ zu der Bereitstellungsfläche (8) bewegt;
- Bewegen der Düse zum Drucken eines Zwischenbereichs (6) während eines Zwischendruckschritts durch Abgeben eines fließfähigen Druckmaterials aus der Druckdüse, wobei sich die Druckdüse relativ zu der Bereitstellungsfläche (8) bewegt und fließfähiges Druckmaterial abgibt über
eine erste Bewegungsdistanz (D1) mit einer ersten Bewegungsgeschwindigkeit (S1),
eine zweite Bewegungsdistanz (D2) mit einer zweiten Bewegungsgeschwindigkeit (S2), und
eine dritte Bewegungsdistanz (D3) mit einer dritten Bewegungsgeschwindigkeit (S3);
- Bewegen der Düse (12) zum Drucken eines zweiten Bereichs (4) während eines zweiten Druckschritts durch Abgeben eines fließfähigen Druckmaterials aus der Druckdüse, wobei sich die Druckdüse während des zweiten Druckschritts mit einer zweiten Druckgeschwindigkeit (V2) relativ zu der Bereitstellungsfläche (8) bewegt;
- Steuern der Zuführeinheit (15) derart, dass während des Zwischendruckschritts keine Unterbrechung des Flusses von Druckmaterial zu der Düse erfolgt,
wobei die erste Bewegungsdistanz (D1) und die dritte Bewegungsdistanz (D3) jeweils kürzer als die zweite Bewegungsdistanz (D2) sind, und wobei die erste Bewegungsgeschwindigkeit (S1) und die dritte Bewegungsgeschwindigkeit (S3) jeweils größer als die erste Druckgeschwindigkeit (V1), die zweite Bewegungsgeschwindigkeit (S2) und die zweite Druckgeschwindigkeit (V2) sind.

15. Computerprogrammprodukt, das einen auf einem computerlesbaren Speicher verkörperten Code umfasst und so konfiguriert ist, dass es, wenn es auf einer oder mehreren Verarbeitungseinheiten ausgeführt wird, das Verfahren nach Anspruch 14 durchführt.

## Revendications

1. Procédé d'impression d'un objet tridimensionnel, comprenant au moins une couche formée d'une première région (2) de matière imprimée et d'une deuxième région (4) de matière imprimée séparée de la première région (2) par un espace, dans lequel l'espace comprend au moins une couche formée d'une région intermédiaire (6), le procédé comprenant les étapes suivantes :
a) l'impression de la première région (2) au cours d'une première étape d'impression par la distribution d'une matière d'impression fluide depuis une buse d'impression (12), dans lequel la buse d'impression se déplace par rapport à une surface d'échelonnement (8) au cours de la première étape d'impression à une première vitesse d'impression (V1) ;
b) l'impression de la région intermédiaire (6) au cours d'une étape d'impression intermédiaire par la distribution d'une matière d'impression fluide depuis la buse d'impression, dans lequel la buse d'impression se déplace par rapport à la surface d'échelonnement (8) et distribue une matière d'impression fluide sur
une première distance de déplacement (D1) à une première vitesse de déplacement (S1),
une deuxième distance de déplacement (D2) à une deuxième vitesse de déplacement (S2), et
une troisième distance de déplacement (D3) à une troisième vitesse de déplacement (S3) ;
c) l'impression de la deuxième région (4) au cours d'une deuxième étape d'impression par la distribution d'une matière d'impression fluide depuis la buse d'impression, dans lequel la buse d'impression se déplace par rapport à la surface d'échelonnement (8) au cours de la deuxième étape d'impression à une deuxième vitesse d'impression (V2) ;
dans lequel, au cours de l'étape d'impression intermédiaire, il n'y a pas d'interruption de l'écoulement de matière d'impression jusqu'à la buse (12), et dans lequel chacune parmi la première distance de déplacement (D1) et la troisième distance de déplacement (D3) est inférieure à la deuxième distance de déplacement (D2), et dans lequel chacune parmi la première vitesse de déplacement (S1) et la troisième vitesse de déplacement (S3) est supérieure à la première vitesse d'impression (V1), la deuxième vitesse de déplacement (S2) et la deuxième vitesse d'impression (V2).

2. Procédé selon la revendication 1, dans lequel la première vitesse d'impression (V1) est égale à la deuxième vitesse d'impression (V2).

3. Procédé selon la revendication 1 ou 2, dans lequel chacune parmi la première vitesse de déplacement (S1) et la troisième vitesse de déplacement (S3) est relativement grande par rapport à la première vitesse d'impression (V1), la deuxième vitesse de déplacement (S2) et la deuxième vitesse d'impression (V2).

4. Procédé selon l'une quelconque des revendications 1 à 3, dans lequel la deuxième vitesse de déplacement (S2) est égale à la première vitesse d'impression (V1) et/ou à la deuxième vitesse d'impression (V2).

5. Procédé selon l'une quelconque des revendications 1 à 3, dans lequel les première et troisième vitesses de déplacement (S1, S3) sont supérieures aux première et deuxième vitesses d'impression (V1, V2), qui sont supérieures à la deuxième vitesse de déplacement (S2).

6. Procédé selon l'une quelconque des revendications 1 à 5, dans lequel la région intermédiaire suit un trajet sinueux.

7. Procédé selon l'une quelconque des revendications 1 à 6, dans lequel les première et troisième vitesses de déplacement sont :
au moins 200 mm/s ;
au moins 300 mm/s, ou
au moins 400 mm/s.

8. Procédé selon l'une quelconque des revendications 1 à 7, dans lequel au moins l'une parmi ce qui suit est limitée à un seuil prédéterminé :
une accélération de la première vitesse d'impression (V1) à la première vitesse de déplacement (S1) ;
une accélération de la deuxième vitesse de déplacement (S2) à la troisième vitesse de déplacement (S3) ;
une décélération de la première vitesse de déplacement (S1) à la deuxième vitesse de déplacement (S2) ;
une décélération de la troisième vitesse de déplacement (S3) à la deuxième vitesse d'impression (V2).

9. Procédé selon l'une quelconque des revendications 1 à 8, dans lequel la matière fluide comprend un polymère souple, par exemple un polyuréthane thermoplastique.

10. Procédé selon l'une quelconque des revendications 1 à 9, dans lequel, au cours de l'impression, la distance entre la buse et une couche précédemment imprimée est constante.

11. Procédé selon l'une quelconque des revendications 1 à 10, dans lequel la matière fluide s'écoule à un débit constant depuis la buse.

12. Procédé selon l'une quelconque des revendications 1 à 11, dans lequel la région intermédiaire (6) quitte la première région (2) à un angle de départ (a), dans lequel l'angle de départ (a) est inférieur à 90 degrés, de préférence inférieur à 45 degrés.

13. Dispositif d'impression d'un objet tridimensionnel comprenant au moins une couche formée d'une première région (2) de matière imprimée et d'une deuxième région (4) de matière imprimée séparée de la première région (2) par un espace, dans lequel l'espace comprend au moins une couche formée d'une région intermédiaire (6), le dispositif comprenant :
une buse d'impression (12) configurée pour distribuer une matière d'impression fluide ;
une surface d'échelonnement (8) sur laquelle des couches successives (10) de matière d'impression peuvent être imprimées pour former l'objet tridimensionnel ; et
un système de commande (14) configuré pour commander un déplacement de la buse d'impression (12) par rapport à la surface d'échelonnement (8), dans lequel le système de commande est configuré pour :
a) déplacer la buse pour l'impression de la première région (2) au cours d'une première étape d'impression par la distribution d'une matière d'impression fluide depuis la buse d'impression (12), dans lequel la buse d'impression (12) se déplace par rapport à la surface d'échelonnement (8) au cours de la première étape d'impression à une première vitesse d'impression (V1) ;
b) déplacer la buse pour l'impression de la région intermédiaire (6) au cours d'une étape d'impression intermédiaire par la distribution d'une matière d'impression fluide depuis la buse d'impression, dans lequel la buse d'impression se déplace par rapport à la surface d'échelonnement (8) et distribue une matière d'impression fluide sur
une première distance de déplacement (D1) à une première vitesse de déplacement (S1),
une deuxième distance de déplacement (D2) à une deuxième vitesse de déplacement (S2), et
une troisième distance de déplacement (D3) à une troisième vitesse de déplacement (S3) ; et
c) déplacer la buse (12) pour l'impression de la deuxième région (4) au cours d'une deuxième étape d'impression par la distribution d'une matière d'impression fluide depuis la buse d'impression, dans lequel la buse d'impression se déplace par rapport à la surface d'échelonnement (8) au cours de la deuxième étape d'impression à une deuxième vitesse d'impression (V2) ;
dans lequel, au cours de l'étape d'impression intermédiaire, il n'y a pas d'interruption de l'écoulement de matière d'impression jusqu'à la buse (12), et dans lequel chacune parmi la première distance de déplacement (D1) et la troisième distance de déplacement (D3) est inférieure à la deuxième distance de déplacement (D2), et dans lequel chacune parmi la première vitesse de déplacement (S1) et la troisième vitesse de déplacement (S3) est supérieure à la première vitesse d'impression (V1), la deuxième vitesse de déplacement (S2) et la deuxième vitesse d'impression (V2).

14. Procédé de commande d'un dispositif d'impression d'un objet tridimensionnel, le dispositif comprenant une buse d'impression (12) configurée pour distribuer une matière d'impression fluide, et une surface d'échelonnement (8) sur laquelle des couches successives (10) de matière d'impression peuvent être imprimées pour former l'objet tridimensionnel, et une unité d'acheminement (15) pour acheminer la matière d'impression jusqu'à la buse d'impression (12), le procédé comprenant :
- déplacer la buse pour l'impression d'une première région (2) au cours d'une première étape d'impression par la distribution d'une matière d'impression fluide depuis la buse d'impression (12), dans lequel la buse d'impression (12) se déplace par rapport à la surface d'échelonnement (8) au cours de la première étape d'impression à une première vitesse d'impression (V1) ;
- déplacer la buse pour l'impression d'une région intermédiaire (6) au cours d'une étape d'impression intermédiaire par la distribution d'une matière d'impression fluide depuis la buse d'impression, dans lequel la buse d'impression se déplace par rapport à la surface d'échelonnement (8) et distribue une matière d'impression fluide sur
une première distance de déplacement (D1) à une première vitesse de déplacement (S1),
une deuxième distance de déplacement (D2) à une deuxième vitesse de déplacement (S2), et
une troisième distance de déplacement (D3) à une troisième vitesse de déplacement (S3) ;
- déplacer la buse (12) pour l'impression d'une deuxième région (4) au cours d'une deuxième étape d'impression par la distribution d'une matière d'impression fluide depuis la buse d'impression, dans lequel la buse d'impression se déplace par rapport à la surface d'échelonnement (8) au cours de la deuxième étape d'impression à une deuxième vitesse d'impression (V2) ;
- commander l'unité d'acheminement (15) de sorte que, au cours de l'étape d'impression intermédiaire, il n'y ait pas d'interruption de l'écoulement de matière d'impression jusqu'à la buse,
dans lequel chacune parmi la première distance de déplacement (D1) et la troisième distance de déplacement (D3) est inférieure à la deuxième distance de déplacement (D2), et dans lequel chacune parmi la première vitesse de déplacement (S1) et la troisième vitesse de déplacement (S3) est supérieure à la première vitesse d'impression (V1), la deuxième vitesse de déplacement (S2) et la deuxième vitesse d'impression (V2).

15. Produit de programme d'ordinateur comprenant un code incorporé à un stockage lisible par ordinateur et configuré de manière à, lorsqu'il est exécuté sur une ou plusieurs unités de traitement, réaliser le procédé selon la revendication 14.
